# EUROPEAN PATENT SPECIFICATION

(11) **EP 4 240 571 B1**
(45) Date of publication and mention of the grant of the patent: **23.10.2024**
(21) Application number: 21802310.9
(22) Date of filing: 29.10.2021
(51) Int. Cl.: B29C 48/07, B29C 48/08, B29C 48/35, B29C 48/375, B29C 48/465, B29K 21/00

(54) **EXTRUSION DEVICE FOR PRODUCING A PRODUCT BASED ON A RUBBER MIXTURE**
EXTRUSIONSVORRICHTUNG ZUR HERSTELLUNG EINES PRODUKTS AUF BASIS EINER KAUTSCHUKMISCHUNG
DISPOSITIF D'EXTRUSION POUR LA FABRICATION D'UN PRODUIT À BASE D'UN MÉLANGE DE CAOUTCHOUC

(30) Priority: 06.11.2020 FR 2011398
(43) Date of publication of application: 13.09.2023
(73) Proprietor: COMPAGNIE GENERALE DES ETABLISSEMENTS MICHELIN, 63000 Clermont-Ferrand (FR)
(72) Inventor: LAMOINE, Philippe, 63040 CLERMONT-FERRAND Cedex 9 (FR)
(74) Representative: M.F.P. Michelin
(86) International application number: PCT/EP2021/080090
(87) International publication number: WO 2022/096383

(56) References cited:
- EP-B1- 1 343 624
- DE-B- 1 229 279
- FR-A7- 2 287 830
- US-A- 3 308 510

## Description

### Technical field

The invention generally relates to the production of products prepared from a rubber mixture. More particularly, the invention relates to an extrusion device for producing a product in the form of a thin strip from a rubber mixture.

### Background

In the field of production of products prepared from a rubber mixture (including tires), use is made of devices for making a profiled product based on a rubber mixture in the form of a very thin strip. The strip made may be very wide and may be deposited directly on a known device (including a tire building drum, or "drum"), or directly superposed at the outlet of the device upon another material (for example, one or more plies or layers already deposited on the drum).

One recognized solution used to obtain this result is the extrusion device 10 shown in Figures 1 and 2 and disclosed by the Applicant's patent EP1343624B1. The extrusion device (or "device") 10 includes a rotating roller (or "roller") 12 that rotates about its axis X-X', having an outer surface 12a. The device 10 also includes a vault 14 with a wall 16 extending between a transverse end (hidden by the roller 12), where an inlet orifice is defined, and an opposite transverse end 16a, where an extrusion orifice is defined when the extrusion device 10 is closed. The extrusion orifice is delimited by the outer surface 12a of the roller 12 and an extrusion plate (or "plate") 18 arranged towards the opposite transverse end 16a of the vault 14. The wall 16, which partially circumferentially covers at least part of the outer surface 12a of the roller 12, includes an inner surface 16b with projecting threads 16c oriented towards the roller 12 and separating consecutive sectors 16d. Thus, the roller 12 and the wall 16 delimit a gap between them that forms a chamber for plasticizing the rubber mixture from which the thin strip is formed.

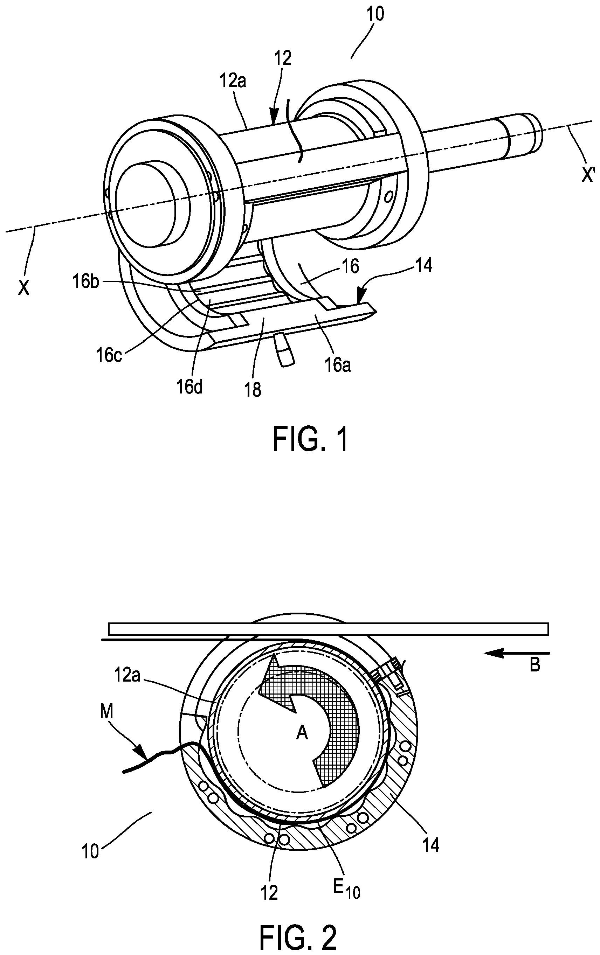

During production, a rubber mixture is subjected to considerable stresses. With reference to Figure 2, in one embodiment of the device 10, the roller 12 arranged relative to the vault 14 rotates in a predetermined direction (see the arrow A in Figure 2) depending on a direction of travel of a substrate on which the strip at the outlet of the device will be placed (see the arrow B in Figure 2). The rubber mixture introduced via the inlet orifice will follow a path as represented by the strip M. The rubber mixture introduced passes into the gap E₁₀ defined between the inner surface 16b of the wall 16 and the outer surface 12a of the roller 12. The rubber mixture passes the projecting threads 16c where significant shearing forces are created. Therefore, sometimes the material close to the roller continues to stick to the roller and passes by the projecting threads, which can result in particles of rubber in the strip formed thereby (for example, in the case where the projecting threads are not uniform).

Since a strip emerging from an extrusion device of the type shown in Figures 1 and 2 is very thin (its thickness being, for example, less than 5 mm and, in some embodiments, around 0.3 mm), it is necessary to ensure that the particles are taken out of this extrusion device. The invention thus relates to making, in the extrusion device shown, a groove in the form of a continuous helix on the outer surface of the roller to get rid of the particles. This helix, along with the rotation of the roller, removes any particles that may be present in the strip formed by the extrusion device.

### Summary of the invention

The invention relates to an extrusion device for forming as a thin strip a product based on a rubber mixture, the device including a rotating roller, an inlet orifice allowing the rubber mixture to flow and a vault circumferentially covering at least part of an outer surface of the roller, the vault having a wall bearing, on its inner surface oriented towards the roller, projecting threads so as to delimit with the surface of the roller a chamber for plasticizing the rubber mixture, the rubber mixture being driven from the inlet orifice towards an extrusion orifice into a gap defining the profile of the product, delimited by the wall of the vault and the outer surface of the roller, characterized in that:
- a groove in the form of a continuous helix is made on the outer surface of the roller, the groove including several striations arranged one beside the other in the direction of movement of the rubber mixture, and the striations being spaced apart from one another so as to create a thread of predetermined pitch;
such that the roller and the vault are assembled such that thread crests created by the continuous helix and the crests of projecting threads on the vault are substantially in contact with one another.

In one embodiment of the extrusion device, the extrusion device further includes an extrusion plate that adjustably delimits, with the outer surface of the roller, the extrusion orifice.

In one embodiment of the extrusion device, each striation has a cross section of predetermined geometry, with a rounded shape at the bottom of each striation, and with pointed edges.

In one embodiment of the extrusion device, an angle between the edges of the striations and the outer surface of the roller is less than or equal to 90°.

In one embodiment of the extrusion device, the striations have a triangular cross section.

In one embodiment of the extrusion device, the projecting threads include:
- at least two axial threads extending substantially axially from the wall of the vault towards the outer surface of the roller; and
- one or more threads oriented in different directions relative to the axial threads, selected from among helical threads or convergent or divergent threads.

In one embodiment of the extrusion device, the gap defining the profile of the product defines a product thickness of less than 5 mm.

In one embodiment of the extrusion device, the vault is pivotably mounted about an axis of rotation borne by a support element of the roller.

The invention also relates to a process for forming the rubber mixture produced by the disclosed extrusion device, the process including the following steps:
- a step of introducing the rubber mixture into the device via the inlet orifice;
- a step of conveying the rubber mixture in the peripheral direction, this step being performed by the roller as it rotates; and
- a step in which the rubber mixture passes as far as the extrusion orifice of the device, before emerging from the device in the form of a thin strip.

The invention also relates to a tire production line, including at least one extrusion device of the type disclosed, arranged downstream of at least one extruder for extruding the rubber mixture.

Further aspects of the invention will become obvious from the following detailed description.

### Brief description of the drawings

The nature and various advantages of the invention will become more evident from reading the following detailed description, and from studying the attached drawings, in all of which the same reference numerals denote identical parts, and in which:
**[****Figure 1]** Figure 1 shows a perspective view of a known extrusion device for producing a profiled product based on a rubber mixture.
**[****Figure 2]** Figure 2 shows a schematic view of an embodiment of the extrusion device of Figure 1.
**[****Figure 3]** Figure 3 shows a perspective view of an embodiment of an extrusion device of the invention having a groove in the form of a continuous helix made on the outer surface of a roller of the extrusion device.
**[****Figure 4]** Figure 4 shows a perspective view of an embodiment of a roller of the extrusion device.
**[****Figure 5]** Figure 5 shows a side view in section of an embodiment of the roller of the extrusion device.

### Detailed description

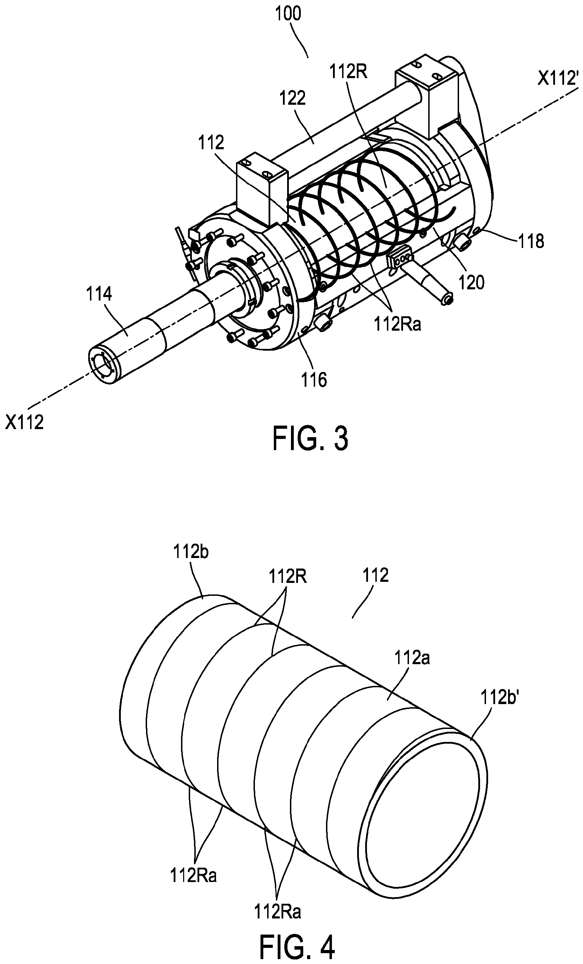

Referring now to the figures, in which the same numbers identify identical elements, Figure 3 shows an embodiment of an extrusion device (or "device") 100 for producing a product in the form of a thin strip from a rubber mixture. The device 100 may form part of an installation or of a tire production line.

It is understood that a rubber mixture (or "mixture") introduced into the device 100 may include all materials necessary for producing the product, including, without limitation, an elastomer (for example, a natural rubber, a synthetic elastomer and combinations and equivalents thereof) and one or more ingredients, such as one or more processing agents, protective agents and reinforcing fillers. The materials may also include one or more other ingredients such as carbon black, silica, oils, resins and crosslinking or vulcanization agents. During mixing of the rubber mixture, all ingredients are introduced in variable quantities depending on the performance desired from the products obtained by the mixing processes (for example, the tires).

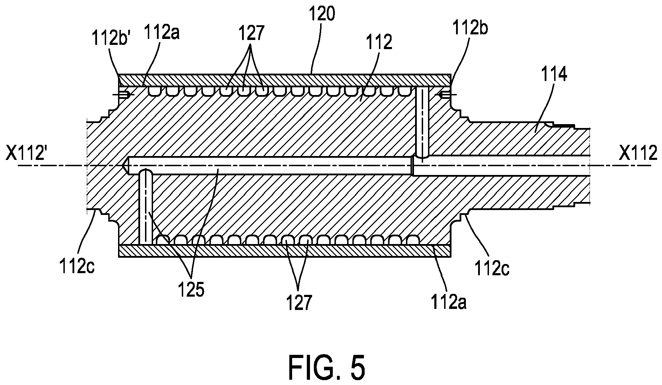

Still with reference to Figure 3, and also referring to Figures 4 and 5, the device 100 includes a rotating roller (or "roller") 112 with a substantially circumferential outer surface 112a. The roller 112 has a center through which an axis of rotation X₁₁₂-X_{112'} of the roller is defined. The roller 112, which extends axially between two opposite ends 112b, 112b', rotates about its axis of rotation relative to a shaft 114 that supports the roller. The roller 112 and the shaft 114 may be integrated or they may be supplied as two separate parts. The roller 112 also includes a pair of shoulders 112c of predetermined equal diameter.

The device 100 further includes a vault (not shown) of the type included in the device 10 of Figures 1 and 2 and disclosed by the Applicant's patent EP1343624B1. As described above and shown in Figures 1 and 2, the vault includes a wall that circumferentially covers at least part of an outer surface 112a of the roller 112. The wall includes an inner surface with projecting threads oriented towards the roller. As understood by a person skilled in the art, the inner surface of the wall has a substantially circumferential profile so as to direct a flow of the rubber mixture into a gap delimited between it and the outer surface 112a of the roller 112, which serves as a chamber for plasticizing the mixture. At the two transverse ends of the vault, corresponding to the shoulders 112c of the roller 112, an inlet orifice and an opposite extrusion orifice are located, respectively. During a process for forming the mixture, the mixture is driven from the inlet orifice, into the gap located between the wall of the vault and the outer surface 112a of the roller 112, towards the extrusion orifice.

It is understood that the vault is not divided into sectors but has at least two projecting threads extending substantially axially from the wall ("axial threads"). These two axial threads guide the mixture towards the extrusion orifice, distributing it over the width of the extrusion orifice. Other projecting threads in the vault may be oriented ("oriented threads") in different directions, such as helical threads or convergent or divergent threads, relative to the axial threads.

Two flanges 116, 118 are mounted respectively on the two shoulders 112c, each flange axially bearing internally a shoulder (not shown) that interacts respectively with a corresponding end of the vault. This allows the vault to be secured to the device by one or more known securing means (for example, one or more screws or one or more equivalent means).

As can be seen in Figure 3, support elements 120, 122 are mounted between the flanges 116, 118, respectively, the support elements being offset circumferentially relative to the roller 112. The support elements 120, 122 are rigidly secured to the flanges 116, 118 by any suitable means (such as screws or equivalent securing means). It is understood that the flanges 116, 118 and the support elements 120, 122 may be made in one piece. The vault may be pivotably mounted on the support element 120 so as to allow the device 100 to be opened and closed. The roller 112 may be mounted on a frame and rotated by a motor at a predetermined speed. The exact position of the roller 112 relative to the frame is adjustable according to the properties of the mixture and the strip formed (its width and its thickness).

It is understood that an extrusion plate (or "plate"), of the type described above in relation to Figures 1 and 2, is arranged internally on the support element 120 in such a way that it delimits, with the outer surface 112a of the roller 112, the extrusion orifice. It is thus possible to adjust the spacing between the plate and the outer surface 112a of the roller 112 so as to define the height of the extrusion orifice according to the profile of the strip of rubber product to be obtained (for example, a thin strip). The plate may include one or more holes for the passage of textile yarns or metal wires so as to produce a reinforced strip that may be placed directly on a building drum or form.

The roller 112 incorporates a means for controlling the temperature inside the roller, this means including, for example, a network including one or more feed channels 125 passing through the roller and one or more conveying grooves 127 (see Figure 5). Thus, a corresponding regulating fluid (such as water, steam, a gas or another known temperature regulating fluid) or electricity is conveyed under the outer surface 112a of the roller 112 so as to regulate the temperature of the mixture during a process for forming the mixture.

Still with reference to Figures 3 to 5, a groove 112R in the form of a continuous helix is made on the outer surface 112a of the roller 112 (the surface oriented towards the projecting threads on the vault). The continuous helix allows the flow of the rubber mixture to move forwards between the continuous helix and the projecting threads on the wall, effectively plasticizing the mixture. The continuous helix may include several striations 112Ra arranged one beside the other in the direction of movement of the mixture (see Figure 4). The striations 112Ra may be spaced apart from one another so as to create a thread of predetermined pitch. The striations 112Ra ensure that the rubber mixture moves forward relative to the peripheral direction during a process for forming the mixture.

Each striation 112Ra forms a channel with a cross section of predetermined geometry (for example, triangular, circular, substantially rectangular, etc. cross section). A rounded shape is delimited at the bottom of each striation 112Ra, and pointed edges scrape the material during plasticization. An angle between the edges of the striations and the outer surface 112a of the roller 112 is, preferably, 90° or less.

The roller 112 and the vault of the device 100 are assembled such that the crests of threads created by the continuous helix are tangential to the crests of threads on the vault. In other words, the crests are substantially in contact with one another. It is said that the crests are "substantially in contact" when the crests face one another with such a small space between them that a rubber material cannot catch on the surfaces of the crests, thereby preventing the formation of particles in the thin strip formed from the mixture. Thus, no product can get stuck on an outer surface 112a of the roller 112 or on the wall of the vault without being pushed by a thread as it rotates.

During a process for forming the mixture, the rubber mixture is introduced into the device 100 via the inlet orifice. As it continues to rotate, the roller 112 conveys the mixture entering in the peripheral direction (see the arrow B in Figure 2) into the gap between the outer surface 112a of the roller and the inner surface of the wall of the vault. The rubber mixture immediately adjacent to the outer surface 112a of the roller 112 is scraped by edges of striations 112Ra as it moves forwards. As the mixture passes by the striations 112Ra, a shearing energy, which corresponds to the height of the striation and the speed of rotation of the roller 112, is conferred on the mixture, raising its temperature and breaking up the bigger particles or clumps in the mixture. Continuity of flow of the mixture is thus maintained so as to even out the temperature and obtain a homogeneous mixture.

The rubber mixture continues to pass through as far as the extrusion orifice, where the plasticized rubber mixture is taken by the plate so as to subsequently emerge from the device 100 in the form of a thin strip. A "thin strip" is said to correspond to a strip with a thickness of less than 5 mm (in so far as the plasticization of the rubber mixture by the device is necessarily limited by the nature of the tool). In some embodiments of the device 100, this thickness is around 0.3 mm at the outlet of the device 100. A thicker strip could be produced, depending on the nature of the rubber mixture and the form in which it is introduced into the inlet orifice of the device (for example, using a mixture already worked prior to being introduced).

By virtue of the groove 112R in the roller 112, any potential particles produced during a process for forming the mixture are removed from the thin strip emerging from the device 100. All of the material can be treated regularly and moderately, producing a very homogeneous end product that can be placed directly on a building drum or form.

It is understood that the device 100 may be arranged at the outlet of at least one extruder such that a mixture emerging from the extruder is directed towards the inlet orifice of the device. It is also understood that the device may be incorporated in a production line with an extruder for extruding several rubber mixtures and at least two devices 100 arranged downstream so as to allow several products (in other words, thin strips) to be deposited successively on a building drum. In one embodiment of a production line incorporating the device 100, the mixture may pass between the rollers of a roller-die type system arranged just downstream of the extruder and upstream of the device 100. In this embodiment, the rotation of the rollers may be managed by the quantity of mixture supplied (detected, for example, by a proximity sensor, by a pressure sensor or by an equivalent device) so as to form a continuous ply of predetermined thickness and width.

For all embodiments of the device 100, a monitoring system could be installed. At least one part of the monitoring system may be supplied in a portable device such as a mobile network device (for example a mobile telephone, a laptop computer, a camera, one or more portable devices connected to the network (including "augmented reality" and/or "virtual reality" devices, portable clothing connected to the network and/or any combinations and/or any equivalents)).

In embodiments of the invention, the device 100 (and/or an installation or a tire production line incorporating the device 100) may receive voice commands or other audio data (representing, for example, a start or stop of the process for forming the mixture). The request may include a request for the current state of a process for forming the rubber mixture. A response generated can be represented audibly, visually, in a tactile manner (for example by way of a haptic interface) and/or in a virtual and/or augmented manner.

In one embodiment, the process for forming the mixture performed by the device 100 of the invention may include a step of training the device 100 (or of training an installation or a tire production line incorporating the device 100) to recognize values representative of the thin strip (for example, values of length, width and thickness relative to the particles detected and removed) and to compare them with expected values. This step may include the step of training the device 100 to recognize a lack of equivalence between the compared values. Each training step may include a classification generated by self-learning means. This classification may include, without limitation, the parameters of the selected rubber mixture recipe, the durations of the processes for forming the mixture and the expected values during an ongoing tire production cycle. The data obtained may be fed into one or more neural networks that manage the device 100 and/or one or more installations or production lines incorporating the device 100.

The terms "at least one" and "one or more" are used interchangeably. The ranges given as lying "between a and b" encompass the values "a" and "b".

Although particular embodiments of the disclosed apparatus have been illustrated and described, it will be appreciated that various changes, additions and modifications can be made without departing from the scope of the present description, which is limited only by the appended claims. Therefore, no limitation should be imposed on the scope of the invention described, apart from those set out in the appended claims.

## Claims

1. An extrusion device (100) for forming as a thin strip a product based on a rubber mixture, the device comprising a rotating roller (112), an inlet orifice allowing the rubber mixture to flow and a vault circumferentially covering at least part of an outer surface (112a) of the roller (112), the vault having a wall bearing, on its inner surface oriented towards the roller (112), projecting threads so as to delimit with the surface of the roller a chamber for plasticizing the rubber mixture, the rubber mixture being driven from the inlet orifice towards an extrusion orifice into a gap defining the profile of the product, delimited by the wall of the vault and the outer surface of the roller, **characterized in that**:
a groove (112R) in the form of a continuous helix is made on the outer surface (112a) of the roller (112), the groove including several striations (112Ra) arranged one beside the other in the direction of movement of the rubber mixture, and the striations (112Ra) being spaced apart from one another so as to create a thread of predetermined pitch;
such that the roller and the vault are assembled such that thread crests created by the continuous helix and the crests of projecting threads on the vault are substantially in contact with one another.

2. The device (100) of Claim 1, further comprising an extrusion plate that adjustably delimits, with the outer surface (112a) of the roller (112), the extrusion orifice.

3. The device (100) of Claim 2, in which each striation (112Ra) has a cross section of predetermined geometry, with a rounded shape at the bottom of each striation, and with pointed edges.

4. The device (100) of Claim 3, in which an angle between the edges of the striations and the outer surface of the roller is less than or equal to 90°.

5. The device (100) of Claim 3 or Claim 4, in which the striations (112Ra) have a triangular cross section.

6. The device (100) of any one of the preceding claims, in which the projecting threads comprise:
- at least two axial threads extending substantially axially from the wall of the vault towards the outer surface (112a) of the roller (112); and
- one or more threads oriented in different directions relative to the axial threads, selected from among helical threads or convergent or divergent threads.

7. The device (100) of any one of the preceding claims, in which the gap defining the profile of the product defines a thickness of the product of less than 5 mm.

8. The device (100) of any one of the preceding claims, in which the vault is pivotably mounted about an axis of rotation borne by a support element (120) of the roller (112).

9. A process for forming the rubber mixture produced by the device (100) of any one of Claims 1 to 8, comprising the following steps:
- a step of introducing the rubber mixture into the device (100) via the inlet orifice;
- a step of conveying the rubber mixture in the peripheral direction, this step being performed by the roller (112) as it rotates; and
- a step in which the rubber mixture passes as far as the extrusion orifice of the device, before emerging from the device (100) in the form of a thin strip.

10. A tire production line, comprising at least one device (100) of any one of Claims 1 to 8, arranged downstream of at least one extruder for extruding the rubber mixture.

## Patentansprüche

1. Extrusionsvorrichtung (100) zum Ausbilden eines Produktes auf der Basis einer Kautschukmischung als einen dünnen Streifen, wobei die Vorrichtung eine sich drehende Walze (112), eine Einlassöffnung, die ein Strömen der Kautschukmischung ermöglicht, und eine Wölbung umfasst, die zumindest einen Teil einer Außenfläche (112a) der Walze (112) umlaufend bedeckt, wobei die Wölbung eine Wandung aufweist, die auf ihrer hin zur Walze (112) ausgerichteten Innenfläche vorstehende Gewinde trägt, um mit der Oberfläche der Walze eine Kammer zum Plastifizieren der Kautschukmischung abzugrenzen, wobei die Kautschukmischung von der Einlassöffnung hin zu einer Extrusionsöffnung in einen das Profil des Produkts definierenden Spalt getrieben wird, der durch die Wandung der Wölbung und die Außenfläche der Walze abgegrenzt ist, **dadurch gekennzeichnet, dass**:
eine Nut (112R) in Form einer durchgehenden Spirale auf der Außenfläche (112a) der Walze (112) hergestellt ist, wobei die Nut mehrere Rillen (112Ra) umfasst, die nebeneinander in der Bewegungsrichtung der Kautschukmischung angeordnet sind, und wobei die Rillen (112Ra) derart voneinander beabstandet sind, dass ein Gewinde mit vorbestimmter Steigung erzeugt wird;
so dass die Walze und die Wölbung derart zusammengefügt sind, dass durch die durchgehende Spirale erzeugte Gewindespitze und die Spitzen vorstehender Gewinde auf der Wölbung im Wesentlichen in Kontakt miteinander stehen.

2. Vorrichtung (100) nach Anspruch 1, ferner umfassend eine Extrusionsplatte, die mit der Außenfläche (112a) der Walze (112) die Extrusionsöffnung einstellbar abgrenzt.

3. Vorrichtung (100) nach Anspruch 2, wobei jede Rille (112Ra) einen Querschnitt einer vorbestimmten Geometrie mit einer abgerundeten Form an der Unterseite jeder Rille und mit spitzen Kanten aufweist.

4. Vorrichtung (100) nach Anspruch 3, wobei ein Winkel zwischen den Kanten der Rillen und der Außenfläche der Walze kleiner als oder gleich 90° ist.

5. Vorrichtung (100) nach Anspruch 3 oder Anspruch 4, wobei die Rillen (112Ra) einen dreieckigen Querschnitt aufweisen.

6. Vorrichtung (100) nach einem der vorhergehenden Ansprüche, wobei die vorstehenden Gewinde Folgendes umfassen:
- mindestens zwei axiale Gewinde, die sich im Wesentlichen axial von der Wandung der Wölbung hin zur Außenfläche (112a) der Walze (112) erstrecken; und
- ein oder mehrere Gewinde, die relativ zu den axialen Gewinden in unterschiedliche Richtung ausgerichtet sind, die aus spiralförmigen Gewinden oder konvergierenden oder divergierenden Gewinden ausgewählt sind.

7. Vorrichtung (100) nach einem der vorhergehenden Ansprüche, wobei der das Profil des Produkts definierende Spalt eine Dicke des Produkt von weniger als 5 mm definiert.

8. Vorrichtung (100) nach einem der vorhergehenden Ansprüche, wobei die Wölbung um eine Drehachse schwenkbar montiert ist, die durch ein Stützelement (120) der Walze (112) getragen ist.

9. Verfahren zum Ausbilden der Kautschukmischung, die durch die Vorrichtung (100) nach einem der Ansprüche 1 bis 8 hergestellt wird, umfassend die folgenden Schritte:
- einen Schritt zum Einbringen der Kautschukmischung in die Vorrichtung (100) über die Einlassöffnung;
- einen Schritt zum Fördern der Kautschukmischung in der Umfangsrichtung, wobei dieser Schritt von die Walze (112) durchgeführt wird, während sie sich dreht; und
- einen Schritt, in dem die Kautschukmischung bis zur Extrusionsöffnung der Vorrichtung verläuft, bevor sie aus der Vorrichtung (100) in Form eines dünnen Streifens austritt.

10. Reifenfertigungslinie, umfassend mindestens eine Vorrichtung (100) nach einem der Ansprüche 1 bis 8, die stromabwärts von mindestens einem Extruder zum Extrudieren der Kautschukmischung angeordnet ist.

## Revendications

1. Un dispositif (100) d'extrusion pour mettre sous forme d'une bande mince un produit à base d'un mélange caoutchouteux, le dispositif comprenant un rouleau (112) rotatif, un orifice d'entrée qui permet un flux du mélange caoutchouteux et une voûte recouvrant circonférentiellement au moins une partie d'une surface extérieure (112a) du rouleau (112), la voûte ayant une paroi portant sur sa surface intérieure orientée vers le rouleau (112) des filets saillants afin de délimiter avec la surface du rouleau une chambre de plastification du mélange caoutchouteux, le mélange caoutchouteux étant refoulé à partir de l'orifice d'entrée vers un orifice d'extrusion dans un entrefer définissant le profil du produit, délimité par la paroi de la voûte et la surface extérieure du rouleau, **caractérisé en ce que** :
une rainure (112R) sous la forme d'une hélice continue est mise en place sur la surface extérieure (112a) du rouleau (112), la rainure incorporant plusieurs stries (112Ra) disposées l'une à côté de l'autre dans le sens de déplacement du mélange caoutchouteux, et les stries (112Ra) étant écartées les unes des autres pour réaliser un filet au pas prédéterminé ;
de sorte que le rouleau et la voûte sont montés de façon que des sommets de filets créés par l'hélice continue et les sommets de filets saillants de la voûte sont sensiblement en contact les uns par rapport aux autres.

2. Le dispositif (100) de la revendication 1, comprenant en outre une lame d'extrusion qui délimite d'une manière réglable, avec la surface extérieure (112a) du rouleau (112), l'orifice d'extrusion.

3. Le dispositif (100) de la revendication 2, dans lequel chaque strie (112Ra) présente une section transversale ayant une géométrie prédéterminée avec une forme arrondie au fond de chaque strie, et ayant des bords à arête.

4. Le dispositif (100) de la revendication 3, dans lequel un angle entre les bords des stries et la surface extérieure du rouleau est égal ou inférieur à 90°.

5. Le dispositif (100) de la revendication 3 ou de la revendication 4, dans lequel les stries (112Ra) comportent une section transversale en section triangulaire.

6. Le dispositif (100) de l'une quelconque des revendications précédentes, dans lequel les filets saillants comprennent :
- au moins deux filets axiaux qui s'étendent sensiblement axialement de la paroi de la voûte vers la surface extérieure (112a) du rouleau (112) ; et
- un ou des filets orientés dans des directions différentes par rapport aux filets axiaux, choisies parmi des filets hélicoïdaux ou des filets convergents ou divergents.

7. Le dispositif (100) de l'une quelconque des revendications précédentes, dans lequel l'entrefer définissant le profil du produit définit une épaisseur du produit inférieure à 5 mm.

8. Le dispositif (100) de l'une quelconque des revendications précédentes, dans lequel la voûte est montée pivotante autour d'un axe de rotation porté par un élément support (120) du rouleau (112).

9. Un procédé de mise en forme du mélange caoutchouteux réalisé par le dispositif (100) de l'une quelconque des revendications 1 à 8, comprenant les étapes suivantes :
- une étape d'introduction du mélange caoutchouteux au dispositif (100) par l'orifice d'entrée ;
- une étape de transport du mélange caoutchouteux dans le sens périphérique, cette étape étant réalisée par le rouleau (112) en cours de rotation ; et
- une étape de passage du mélange caoutchouteux jusqu'à l'orifice d'extrusion du dispositif pour ensuite sortir du dispositif (100) sous forme d'une bande mince.

10. Une ligne de production des pneumatiques, comprenant au moins un dispositif (100) de l'une quelconque des revendications 1 à 8 disposé en aval d'au moins une extrudeuse du mélange caoutchouteux.
